# EUROPÄISCHE PATENTSCHRIFT

(11) **EP 2 659 101 B1**
(45) Veröffentlichungstag und Bekanntmachung des Hinweises auf die Patenterteilung: **19.08.2015**
(21) Anmeldenummer: 11782044.9
(22) Anmeldetag: 27.10.2011
(51) Int. Cl.: F01N 3/28, F01N 3/20, F01N 13/18

(54) **VORRICHTUNG ZUM VERTEILEN VON FLUIDEN IN ABGASANLAGEN**
DEVICE FOR SUPPLYING FLUIDS IN EXHAUST SYSTEMS
DISPOSITIF POUR INJECTER DES FLUIDES DANS DES SYSTÈMES D'ÉCHAPPEMENT

(30) Priorität: 27.12.2010 DE 102010056314
(43) Veröffentlichungstag der Anmeldung: 06.11.2013
(60) Teilanmeldung: 15174981.9
(73) Patentinhaber: Friedrich Boysen GmbH & Co. KG, 72213 Altensteig (DE)
(72) Erfinder: FISCHER, Michael, 72202 Nagold (DE); MÜLLER, Michael, 72202 Nagold (DE); SCHMIDT, Jürgen, 75417 Mühlacker (DE)
(74) Vertreter: Manitz, Finsterwald & Partner GbR
(86) Internationale Anmeldenummer: PCT/EP2011/005438
(87) Internationale Veröffentlichungsnummer: WO 2012/089290

(56) Entgegenhaltungen:
- WO-A1-2005/073524
- WO-A1-2007/091969
- DE-A1-102006 019 052
- DE-U1-202008 001 547
- US-A1- 2009 084 094

## Beschreibung

Die vorliegende Erfindung betrifft eine Vorrichtung zum Verteilen von Fluiden, insbesondere eines Wasser-Harnstoff-Gemisches oder eines Flüssigkraftstoffs, in Abgasanlagen einer Brennkraftmaschine, mit einer insbesondere vor einem so genannten SCR-Katalysator in den Abgasstrang mündenden Einspritzeinrichtung.

Aufgrund strenger werdender Abgasvorschriften für Verbrennungsmotoren wird es erforderlich, Stickoxide (NOx) im Abgas zu reduzieren. Eine bekannte Möglichkeit besteht darin, die Stickoxide in einer sogenannten selektiven katalytischen Reduktion (SCR) zu Stickstoff und Wasser zu reduzieren. Dies erfolgt in einem sogenannten SCR-Katalysator unter Verwendung eines in das Abgas eingespritzten Reduktionsmittels. Insbesondere kann hierfür ein Wasser-Harnstoff-Gemisch verwendet werden, dessen Harnstoff im Abgas zu Ammoniak zerfällt, welches mit den Stickoxiden reagiert. Des Weiteren kann auch Flüssigkraftstoff in Form unterschiedlicher Kohlenwasserstoffverbindungen (HC) in das Abgas eingespritzt werden.

Wünschenswert ist bei derartigen Reduktionsverfahren grundsätzlich, dass einerseits das Reduktionsmittel möglichst gleichmäßig mit dem Abgas vermischt wird und andererseits eine möglichst vollständige Verdampfung bzw. Thermolyse des flüssigen Reduktionsmittels erzielt wird, um einen hohen Wirkungsgrad bei der Reduktion und einen ablagerungsfreien Betrieb zu erreichen.

Prinzipiell kann eine Kombination aus einer Mehrzahl von Einzelmaßnahmen zur Erzielung einer gleichmäßigen Vermischung der Fluide mit dem Abgas und einer vollständigen Verdampfung der Fluide in dem Abgas vorgesehen sein, wobei die Einzelmaßnahmen wenigstens eine Drallerzeugungseinrichtung und/oder wenigstens eine Mischvorrichtung, bevorzugt wenigstens einen Katalysator und eine Einspritzdüse der Einspritzeinrichtung umfassen, welche in einer vorgegebenen Beabstandung zu einer Wand des Abgasstrangs angeordnet ist.

Die US 2009/0084094 A1 offenbart eine Abgasnachbehandlungsanlage, welche einen Partikelfilter, einen Katalysator und eine Einspritzvorrichtung zum Einbringen einer Harnstofflösung in den Abgasstrom zwischen dem Filter und dem Katalysator umfasst. Ein Gitterrost dient hierbei zum Vermischen der Harnstofflösung mit dem Abgas. Der Abgaskanal ist zwischen dem Filter und dem Katalysator aus zwei teleskopartig überlappenden Einzelrohren zusammengesetzt, wobei das äußere Rohr einen flexiblen Abschnitt in Form eines Wellenbalgs aufweist. Zwischen den Einzelrohren besteht ein ringförmiger Freiraum, wobei eine Blende einen Gaseintritt in den Freiraum verhindert.

In der WO 2007/091969 A1 ist eine Einspritzvorrichtung zum Versprühen von Reduktionsmittel in einen Abgasstrom offenbart, bei welcher die Einspritzdüse mit zwei koaxialen Zufuhrleitungen in Verbindung steht. Während die eine Leitung das flüssige Reduktionsmittel zuführt, führt die andere Leitung Druckluft zu, um so ein feineres Versprühen zu erzielen. Weiterhin ist ein Führungselement zur Turbulenzerzeugung und Verdampfungsunterstützung vorgesehen.

Die DE 20 2008 001 547 U1 offenbart eine Vorrichtung zum Einbringen von Harnstofflösung in einen Abgasstrom, wobei die Vorrichtung einen in die Abgasleitung mündenden Zufuhrstutzen aufweist. Stromabwärts des Zuführstutzens ist ein Mischelement angeordnet. Die beheizte Wand eines im Zuführstutzen angeordneten Leitelements dient einer Verdampfungsförderung.

Bei der in der WO 2005/073524 A1 offenbarten Einspritzvorrichtung wird ein flüssiges Reduktionsmittel auf ein in der Abgasleitung platziertes, rohrförmiges Prallblech gesprüht. Hinter dem Prallblech wird das Abgas durch einen statischen Mischer verwirbelt.

Bei dem in der DE 10 2006 019 052 A1 offenbarten System ist zwischen Einspritzvorrichtung und Katalysator ein Verdampfermodul angeordnet, welches zwei Klappenmischer und einen sich zwischen den beiden Mischern erstreckenden axialen Verdampferkanal umfasst.

Der Erfindung liegt daher die Aufgabe zugrunde, die Verteilung von Fluiden im Abgas zu verbessern und erforderlichenfalls auf möglichst einfache Weise eine vollständige Verdampfung der Fluide ohne Ablagerungen sicherzustellen.

Die Lösung der Aufgabe erfolgt durch eine Vorrichtung mit den Merkmalen des Anspruchs 1.

Erfindungsgemäß ist wenigstens eine Drallerzeugungseinrichtung vorgesehen, welche mehrere turbinenartig angeordnete Gasleitschaufeln umfasst. Eine derartige Drallerzeugungseinrichtung kann je nach Anwendung stromaufwärts oder stromabwärts der Einspritzeinrichtung vorgesehen sein. Durch die Gasleitschaufeln ist eine gute Drallerzeugung im Abgasstrom erreichbar. Weiterhin können die Gasleitschaufeln als Verdampferfläche wirken und somit den Verdampfungsgrad erhöhen. Aufgrund der turbinenartigen Anordnung der Gasleitschaufeln wird eine besonders große Verdampferfläche zur Verfügung gestellt. Die turbinenartige Ausgestaltung bewirkt darüber hinaus eine gute Verblockung des Abgasquerschnitts, wobei über die Länge und Breite sowie den Anstellwinkel der Schaufeln das Verhältnis zwischen Abgasgegendruck und Durchmischungsleistung optimiert werden kann.

Weiterhin ist erfindungsgemäß eine Mischvorrichtung vorgesehen, die wenigstens eine Drallerzeugungseinrichtung und eine rohrförmige Verdampfereinrichtung umfasst. Die Mischvorrichtung ist vorzugsweise stromabwärts der Einspritzeinrichtung angeordnet und dient dazu, die eingespritzten Fluide und gegebenenfalls vorhomogenisierten Fluide gleichmäßig mit dem Abgas zu vermischen. Durch eine Kombination aus einer Drallerzeugungseinrichtung - welche insbesondere wiederum mehrere turbinenartig angeordnete Gasleitschaufeln umfassen kann - und einer rohrförmigen Verdampfereinrichtung kann ein besonders hoher Vermischungsgrad erzielt werden, wobei die Reihenfolge und der Abstand zwischen den beiden Komponenten auf die jeweilige Anwendung abgestimmt werden kann.

Erfindungsgemäß wurde erkannt, dass eine gute Durchmischung und ablagerungsfreie Verdampfung der Fluide in dem Abgas nur dann zu erreichen ist, wenn mehrere Maßnahmen in geeigneter Weise miteinander kombiniert werden. Maßgeblich für die Auswahl und die Konfiguration der Einzelmaßnahmen sind insbesondere die Spritz- oder Sprühcharakteristik der Einspritzeinrichtung, die Länge der Verteilungs- oder Verdampfungsstrecke, die Temperatur sowie die Rohrform und der Rohrquerschnitt des betreffenden Abgasanlagenabschnitts. Durch Berücksichtigung der thermodynamischen Gegebenheiten und der Einbauspezifikationen sowie durch geeignete Anpassung der verschiedenen Einzelmaßnahmen lässt sich somit in gewünschter Weise eine ablagerungsfreie Verteilung und Verdampfung der Fluide im Abgasstrom erreichen.

Weiterbildungen der Erfindung sind in den abhängigen Ansprüchen, der Beschreibung sowie den beigefügten Zeichnungen angegeben.

Gemäß einer Ausführungsform der Erfindung ist ein Hydrolysekatalysator vorgesehen, welcher insbesondere stromaufwärts eines sogenannten SCR-Katalysators angeordnet ist. Ein derartiger Hydrolysekatalysator kann z.B. eine Isocyansäureumwandlung in Ammoniak und Kohlendioxid unterstützen und dadurch einen SCR-Hauptkatalysator entlasten.

Weiterhin kann ein Stromführungselement vorgesehen sein, das im Inneren des Abgasstrangs angeordnet und zumindest abschnittsweise von einer Wand des Abgasstrangs beabstandet ist und das zumindest teilweise in einen flexiblen Entkopplungsabschnitt des Abgasstrangs hineinragt, wobei das Stromführungselement insbesondere in einem stromabwärtigen Bereich des Entkopplungsabschnitts endet. Flexible Entkopplungsabschnitte im Abgasstrang dienen insbesondere dazu, einer Übertragung von Schwingungen oder unterschiedlichen thermischen Ausdehnungen von Abgasstrangkomponenten entgegenzuwirken. Beispielsweise können derartige Entkopplungsabschnitte als Wellschlauch, Wickelschlauch oder Agraffschlauch ausgeführt sein. Je nach Anwendung kann auch eine Kombination der genannten Schlaucharten vorliegen, d.h. es kann z.B. ein von einem Wellrohr umhüllter Wickelschlauch vorgesehen sein. In den bei derartigen Entkopplungsabschnitten vorhandenen Vertiefungen und Wandunregelmäßigkeiten können sich unerwünschte Ablagerungen der eingespritzten Fluide und/oder von Reaktionsprodukten des Abgases und der Fluide ansammeln. Solche Ablagerungen werden dadurch vermieden, dass das Abgas durch das vorzugsweise glattwandige Stromführungselement geleitet und somit zumindest abschnittsweise an einem Vorbeiströmen an der unregelmäßigen Wand des Entkopplungsabschnitts gehindert wird. Das Stromführungselement kann die Strömung des Abgases ferner durch seine spezielle Formgebung, z.B. durch Dellen, Mulden, Einbuchtungen oder dergleichen, in einer gewünschten Weise beeinflussen.

Die Einspritzeinrichtung kann insbesondere stromaufwärts des flexiblen Entkopplungsabschnitts des Abgasstrangs angeordnet sein. Der Vorteil der Ablagerungsvermeidung durch das Stromführungselement kommt dann besonders zur Geltung. Sollte die Anwendung dies erfordern, kann die Einspritzeinrichtung auch zwischen zwei flexiblen Entkopplungsabschnitten des Abgasstrangs angeordnet sein.

Das Stromführungselement kann als zu dem Abgasstrang zumindest abschnittsweise koaxiales Innenrohr ausgebildet sein. Ein derartiges Innenrohr wird auch als "Inliner" bezeichnet. Vorzugsweise ist das Innenrohr vollwandig ausgeführt.

An seinem stromabwärtigen Ende kann das Stromführungselement einen umfangsseitig unterbrochenen, insbesondere halbschalenförmigen, Fortsetzungsabschnitt aufweisen, z.B. in Form eines in Längsrichtung halbierten Rohrstücks. Ein derartiger Fortsetzungsabschnitt kann zum gezielten Auffangen von Fluidresten eingesetzt werden, um diese nachfolgend zu verdampfen.

Gemäß einer Ausführungsform ist das Stromführungselement in Abgasstromrichtung gesehen abschnittsweise verjüngt. Die Verjüngungsstelle ist bevorzugt stromabwärts einer Mischvorrichtung angeordnet. Alternativ oder zusätzlich kann auch stromaufwärts einer Mischvorrichtung eine Verjüngungsstelle vorgesehen sein. Eine Verjüngung bewirkt aufgrund des Venturi-Effekts eine Erhöhung der Strömungsgeschwindigkeit, was das Vermischen des Fluids in dem Abgas fördert.

Gemäß einer weiteren Ausgestaltung ist das Stromführungselement derart in den Abgasstrang eingebunden, dass es außenseitig von Abgas umströmbar ist. Das Abgas wird bei einer derartigen Ausführung also nicht nur durch das Stromführungselement hindurchgeleitet, sondern auch außen an diesem vorbeigeleitet. Ein Teil des Abgasstroms umgeht somit im Nebenstrom Drallerzeugungseinrichtungen und/oder Mischvorrichtungen, welche in das Stromführungselement integriert sein können. Zu diesem Zweck kann das Stromführungselement mittels mehrerer Haltestege derart in dem zugehörigen tragenden Abgasrohr befestigt sein, dass ein Luftspalt zwischen der Außenwand des Stromführungselements und der Innenwand des Abgasrohrs besteht. Auf diese Weise wird das Stromführungselement durch das außen vorbeiströmende heiße Abgas erwärmt, wodurch eine Verdampfung von Fluid im Inneren des Stromführungselements gefördert wird.

Weiterhin kann die Drallerzeugungseinrichtung und/oder die Mischvorrichtung in ein Stromführungselement integriert sein und/oder die Einspritzeinrichtung kann in ein Stromführungselement münden. Hierdurch kann erreicht werden, dass eine Fluidverteilungsvorrichtung insgesamt weniger Bauraum beansprucht, indem nämlich das Stromführungselement überlappend mit einer anderen Funktionskomponente im Abgasstrang angeordnet wird.

Gemäß einer weiteren Ausführungsform ist die Einspritzdüse an der Wand des Abgasstrangs angeordnet. Die Fluide werden also in der Nähe einer Rohr- oder Leitungswand, d.h. am äußeren Rand der Strömung, eingespritzt. Eine derartige Anordnung der Einspritzdüse kann insbesondere bei Vorrichtungen vorgesehen sein, bei welchen die Einspritzdüse in einem gebogenen oder abgewinkelten Abschnitt des Abgasstrangs angeordnet ist. Sollte die Anwendung dies erfordern, kann die Einspritzdüse auch in einem vorbestimmten, relativ geringen Abstand zur Wand angeordnet sein.

Gemäß einer alternativen Ausgestaltung ist die Einspritzdüse bezogen auf einen Querschnitt des Abgasstrangs mittig angeordnet, d.h. die Fluide werden im Zentrum der Strömung eingespritzt. Eine derartige mittige Anordnung kann auch eine Anordnung in vorgegebenem geringem Abstand zum Zentrum der Querschnittsfläche des betreffenden Leitungsabschnitts beinhalten.

Die Einspritzdüse kann dazu ausgebildet sein, die Fluide hohlkegelartig oder vollkegelartig zu versprühen. Einspritzdüsen mit hohlkegelartiger Sprühcharakteristik sind relativ kostengünstig und in vielfachen Varianten erhältlich. Einspritzdüsen mit vollkegelartiger Sprühcharakteristik gewährleisten hingegen einen besseren Durchmischungsgrad des versprühten Fluids in dem umgebenden Gasstrom.

Es können auch zwei gegeneinander gestellte Einspritzdüsen zum flachkegelartigen Versprühen der Fluide vorgesehen sein. Eine derartige Konstellation ist insbesondere bei einem ovalen Leitungsquerschnitt in dem betreffenden Abgasanlagenabschnitt vorteilhaft.

Die Einspritzeinrichtung kann zum Versprühen der Fluide mit einer vorbestimmten durchschnittlichen Tropfengröße ausgebildet sein. Als Kenngröße für die Tropfengröße kann beispielsweise der Sauterdurchmesser (SMD) herangezogen werden. Durch gezielte Variation der Tropfengröße kann somit der Wirkungsgrad der Verteilungsvorrichtung optimiert werden. Zu diesem Zweck können - sofern die Tropfengröße bekannt ist - die erforderlichen Komponenten der Verteilungsvorrichtung sowie die entsprechenden Parameter auf die Tropfengröße abgestimmt werden. Umgekehrt kann bei vorgegebenen Komponenten und Parametern eine bestimmte optimale Tropfengröße gewählt werden, um so einen ablagerungsfreien Betrieb der Verteilungsvorrichtung zu gewährleisten. Je nach Anwendung kann also die durchschnittliche Tropfengröße der Einspritzeinrichtung ein Eingangsparameter oder ein Ausgangsparameter der zu konfigurierenden Verteilungsvorrichtung sein.

Gemäß einer weiteren Ausführungsform umfasst die Kombination aus einer Mehrzahl von Einzelmaßnahmen wenigstens eine Drallerzeugungseinrichtung und eine Einspritzdüse der Einspritzeinrichtung, welche bezogen auf einen Querschnitt des Abgasstrangs mittig angeordnet ist und zum vollkegelartigen Versprühen der Fluide mit einer Tropfengröße von höchstens 25 µm Sauterdurchmesser ausgebildet ist. Es hat sich nämlich gezeigt, dass bei einer mittigen Einspritzung mit vollkegelartiger Sprühcharakteristik und relativ kleinen Tröpfchen lediglich eine - stromaufwärts oder stromabwärts der Einspritzeinrichtung angeordnete - Drallerzeugungseinrichtung ausreicht, um eine gleichmäßige Verteilung der in der Gasphase verdampften Fluide zu erzielen. Auf weitere kostspielige Komponenten der Verteilungsvorrichtung kann somit verzichtet werden.

Gemäß einer weiteren Ausführungsform der Erfindung umfasst die Kombination aus einer Mehrzahl von Einzelmaßnahmen wenigstens eine Drallerzeugungseinrichtung, die stromaufwärts der Einspritzeinrichtung vorgesehen ist, wenigstens eine Mischvorrichtung, die stromabwärts der Einspritzeinrichtung vorgesehen ist und die wenigstens eine rohrförmige Verdampfereinrichtung umfasst, und eine Einspritzdüse der Einspritzeinrichtung, welche bezogen auf einen Querschnitt des Abgasstrangs mittig angeordnet ist und zum hohlkegelartigen Versprühen der Fluide mit einer Tropfengröße von höchstens 25 µm Sauterdurchmesser ausgebildet ist. Sofern also zusätzlich zu der Drallerzeugungseinrichtung eine stromabwärts der Einspritzeinrichtung angeordnete Mischvorrichtung mit wenigstens einer rohrförmigen Verdampfereinrichtung vorgesehen ist, kann auf eine einfache hohlkegelartig sprühende Einspritzdüse zurückgegriffen werden.

Gemäß einer weiteren Ausführungsform der Erfindung umfasst die Kombination aus einer Mehrzahl von Einzelmaßnahmen wenigstens eine Drallerzeugungseinrichtung, die stromaufwärts der Einspritzeinrichtung vorgesehen ist, wenigstens eine Mischvorrichtung, die stromabwärts der Einspritzeinrichtung vorgesehen ist und die wenigstens eine Drallerzeugungseinrichtung umfasst, und eine Einspritzdüse der Einspritzeinrichtung, welche bezogen auf einen Querschnitt des Abgasstrangs mittig angeordnet ist und zum vollkegelartigen Versprühen der Fluide mit einer Tropfengröße von mindestens 25 µm Sauterdurchmesser ausgebildet ist. Im Falle von größeren Tropfen sind also für eine gleichmäßige Verteilung zwei Drallerzeugungseinrichtungen notwendig - jeweils stromaufwärts und stromabwärts der Einspritzeinrichtung. Bei Verwendung einer vollkegelartig sprühenden Einspritzdüse kann das Entstehen von Nebenprodukten vermieden werden.

Gemäß einer weiteren Ausführungsform umfasst die Kombination aus einer Mehrzahl von Einzelmaßnahmen wenigstens eine Drallerzeugungseinrichtung, die stromaufwärts der Einspritzeinrichtung vorgesehen ist, wenigstens eine Mischvorrichtung, die stromabwärts der Einspritzeinrichtung vorgesehen ist und die wenigstens eine Drallerzeugungseinrichtung und eine rohrförmige Verdampfereinrichtung umfasst, und eine Einspritzdüse der Einspritzeinrichtung, welche bezogen auf einen Querschnitt des Abgasstrangs mittig angeordnet ist und zum hohlkegelartigen Versprühen der Fluide mit einer Tropfengröße von mindestens 25 µm Sauterdurchmesser ausgebildet ist. Bei dieser Konstellation sind zwei Drallerzeugungseinrichtungen und eine rohrförmige Verdampfereinrichtung vorgesehen. Dafür ist lediglich eine einfache hohlkegelartig sprühende Einspritzdüse vorzusehen.

Gemäß einer weiteren Ausführungsform der Erfindung umfasst die Kombination aus einer Mehrzahl von Einzelmaßnahmen wenigstens eine Mischvorrichtung, die stromabwärts der Einspritzeinrichtung vorgesehen ist und die wenigstens eine Drallerzeugungseinrichtung umfasst, und eine Einspritzdüse der Einspritzeinrichtung, welche an der Wand des Abgasstrangs angeordnet ist und zum vollkegelartigen Versprühen der Fluide mit einer Tropfengröße von mindestens 50 µm Sauterdurchmesser ausgebildet ist. Im Falle einer wandnahen Einspritzung der Fluide ist es also zweckmäßig, die Einspritzdüse für größere Tropfen auszulegen. Darüber hinaus ist eine Drallerzeugungseinrichtung stromabwärts der Einspritzeinrichtung vorzusehen.

Gemäß einer weiteren Ausführungsform der Erfindung umfasst die Kombination aus einer Mehrzahl von Einzelmaßnahmen wenigstens eine Mischvorrichtung, die stromabwärts der Einspritzeinrichtung vorgesehen ist und die wenigstens eine Drallerzeugungseinrichtung und eine rohrförmige Verdampfereinrichtung umfasst, und eine Einspritzdüse der Einspritzeinrichtung, welche an der Wand des Abgasstrangs angeordnet ist und zum hohlkegelartigen Versprühen der Fluide mit einer Tropfengröße von mindestens 50 µm Sauterdurchmesser ausgebildet ist. Bei Verwendung einer hohlkegelartig sprühenden Einspritzdüse und wandnaher Einspritzung ist es also zweckmäßig, eine stromabwärts der Einspritzeinrichtung angeordnete Mischvorrichtung einzusetzen, die wenigstens eine Drallerzeugungseinrichtung und wenigstens eine rohrförmige Verdampfereinrichtung umfasst.

Erfindungsgemäß wurde bei der Ermittlung der vorteilhaften Ausführungsformen insbesondere berücksichtigt, dass die eingespritzten Tropfen umso schneller verdampfen, je kleiner sie sind. Allerdings sind kleinere Tropfen auch schwieriger in den Abgasstrom einzubringen, d.h. die Eindringtiefe sinkt mit abnehmendem Durchmesser oder abnehmendem Impuls der Tropfen.

Die Erfindung wird im Folgenden unter Bezugnahme auf die Zeichnungen beispielhaft beschrieben.
- Fig. 1: zeigt eine teilweise aufgeschnittene perspektivische Ansicht eines Abgasstrangabschnitts, in welchen eine erfindungsgemäße Vorrichtung zum Verteilen von Fluiden integriert ist.
- Fig. 2: zeigt eine alternative Ausführungsform einer erfindungsgemäßen Vorrichtung zur Verteilung von Fluiden, welche in einen abgewinkelten Abgasstrangabschnitt integriert ist.
- Fig. 3: zeigt eine weitere Ausführungsform einer erfindungsgemäßen Vorrichtung zur Verteilung von Fluiden.
- Fig. 4-8: zeigen in schematischer Form weitere beispielhafte Ausführungsformen der Erfindung.

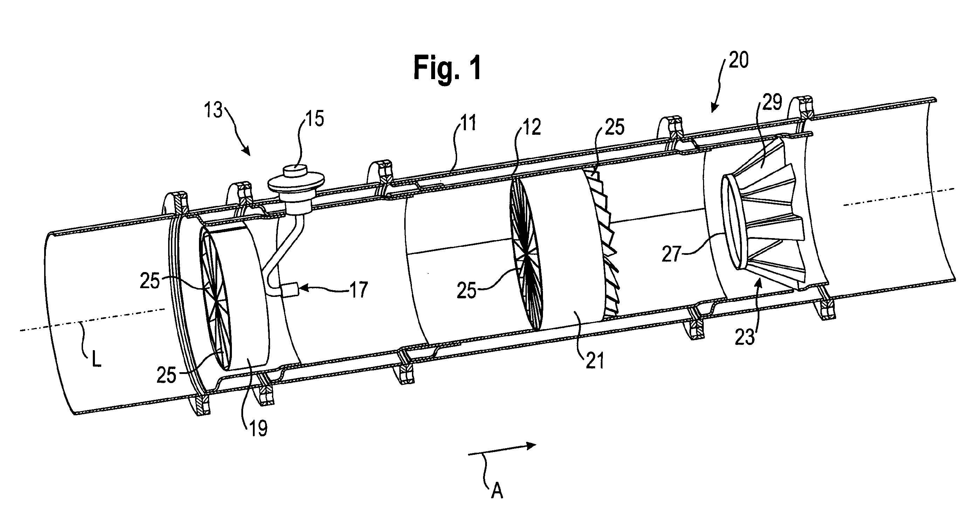

Fig. 1 zeigt einen Rohrabschnitt 11 eines Abgasstrangs, durch welchen entlang einer Abgasstromrichtung A zu reinigende Abgase eines nicht dargestellten Dieselmotors strömen. In dem Rohrabschnitt 11 ist ein Innenrohr 12 angeordnet, welches als Abgasmischerrohr ausgebildet ist, wie nachfolgend noch genauer beschrieben wird. Der Rohrabschnitt 11 mit dem Innenrohr 12 ist in Abgasstromrichtung A vor einem ebenfalls nicht dargestellten SCR-Katalysator angeordnet. In das Innenrohr 12 ist eine Vorrichtung 13 zum Verteilen eines Fluids, z.B. eines Wasser-Harnstoff-Gemisches, in dem Abgas integriert. Die Vorrichtung umfasst eine Einspritzeinrichtung 15 mit einer in das Innenrohr 12 mündenden Einspritzdüse 17. Mittels der Einspritzdüse 17 wird das einzuspritzende Fluid in das strömende Abgas gesprüht. Wie aus Fig. 1 hervorgeht, sitzt die Einspritzdüse 17 bezogen auf den Leitungsquerschnitt mittig in dem Rohrabschnitt 11, also auf der Längsmittelachse L des Rohrabschnitts 11. Die Einspritzdüse 17 kann je nach Anwendung dazu ausgebildet sein, das Fluid hohlkegelartig oder vollkegelartig zu versprühen. Ferner ist die Einspritzeinrichtung 15 einschließlich der Einspritzdüse 17 derart angepasst, dass beim Versprühen eine vorgegebene durchschnittliche Tropfengröße erzeugt wird.

Die Vorrichtung 13 umfasst ferner eine in Abgasstromrichtung A vor der Einspritzeinrichtung 15 angeordnete erste Drallerzeugungseinrichtung 19 sowie eine in Abgasstromrichtung A hinter der Einspritzeinrichtung 15 angeordnete Mischvorrichtung 20. Die Mischvorrichtung 20 umfasst eine zweite Drallerzeugungseinrichtung 21 und eine in Abgasstromrichtung A hinter dieser angeordnete rohrförmige Verdampfereinrichtung 23. Die erste Drallerzeugungseinrichtung 19 und die zweite Drallerzeugungseinrichtung 21 bestehen jeweils aus turbinenartig angeordneten und ausgebildeten Gasleitschaufeln 25. Die Gasleitschaufeln 25 verlaufen im Wesentlichen von der Längsmittelachse L des Rohrabschnitts 11 radial nach außen, sind jedoch in sich gebogen, so dass ihre Berührungslinie mit dem Rohrabschnitt 11 längs einer Spirallinie verläuft. Dadurch ergibt sich eine starke Verblockung des Querschnitts des Rohrabschnitts 11. Beim Durchströmen der Drallerzeugungseinrichtungen 19, 21 werden im Abgasstrom Turbulenzen erzeugt, welche eine Vermischung des Fluids mit dem strömenden Abgas unterstützen. Um die Vermischung weiter zu verbessern, können die Gasleitschaufeln 25 derart geformt sein, dass zwischen der ersten Drallerzeugungseinrichtung 19 und der zweiten Drallerzeugungseinrichtung 21 eine turbulenzverstärkende Drallrichtungsumkehr stattfindet.

Die rohrförmige Verdampfereinrichtung 23 weist ein zentrales Rohr 27 sowie blütenartig geformte Außenflächen 29 auf, welche die Vermischung des Fluids und des Abgases weiter verbessern und außerdem als Verdampferflächen und/oder als Prallplatten wirken, um so eine Verdampfung des Fluids zu fördern.

Die Oberflächen der Elemente 19, 21 und 23 können strukturiert oder perforiert sein, um die Zerstäubung und Verteilung des Fluids weiter zu verbessern.

Je nach Anwendung kann darüber hinaus an einer beliebigen Stelle des Rohrabschnitts 11 ein nicht dargestellter Hydrolysekatalysator vorgesehen sein, um den SCR-Katalysator zu entlasten.

Das Abgas durchströmt während des Betriebs gemäß der Abgasstromrichtung A den Rohrabschnitt 11, wobei die Drallerzeugungseinrichtungen 19, 21 sowie die rohrförmige Verdampfereinrichtung 23 erwärmt werden. Das aus dem Rohrabschnitt 11 austretende Abgas gelangt anschließend in den SCR-Katalysator. Zur Erzeugung und/oder Förderung einer Reduktion von Stickoxiden im SCR-Katalysator wird mittels der Einspritzeinrichtung 15 z.B. ein Wasser-Harnstoff-Gemisch in den Abgasstrom eingespritzt. In dem dargestellten Ausführungsbeispiel ist der Einspritzeinrichtung 15 lediglich eine einzelne Einspritzdüse 17 zugeordnet. Bei bestimmten Anwendungen kann die Einspritzeinrichtung 15 jedoch auch mehrere Einspritzdüsen 17 umfassen. Aufgrund der mittels der ersten Drallerzeugungseinrichtung 19 erzeugten Turbulenzen in dem Abgasstrahl findet eine Durchmischung zwischen dem Abgas und den eingespritzten Tröpfchen des Wasser-Harnstoff-Gemischs statt. Das so erzeugte Gemisch gelangt dann mit dem Abgas in die zweite Drallerzeugungseinrichtung 21, in welcher das Abgas mit dem Wasser-Harnstoff-Gemisch in eine Rotation um die Längsmittelachse L des Rohrabschnitts 11 versetzt wird. Dadurch erfolgt eine weiter verbesserte Durchmischung des Abgases mit dem Wasser-Harnstoff-Gemisch. Zudem wirken auch die Gasleitschaufeln 25 der Drallerzeugungseinrichtung 21 als Verdampferfläche.

Im weiteren Verlauf gelangt das teilweise verdampfte Wasser-Harnstoff-Gemisch mit dem Abgas in die rohrförmige Verdampfereinrichtung 23, wo eine weitere Durchmischung des Wasser-Harnstoff-Gemischs mit dem Abgas und eine weitere Verdampfung des Wasser-Harnstoff-Gemischs an den entsprechenden Verdampferflächen erfolgt.

Nach dem Austritt aus dem Rohrabschnitt 11 gelangt das Abgas gegebenenfalls in ein weiteres Verdampferrohr. Hier können eventuell noch vorhandene flüssige Anteile des Wasser-Harnstoff-Gemischs verdampft werden, so dass dann nur noch gasförmiges Reduktionsmittel in den SCR-Katalysator gelangt. In diesem erfolgt dann die Reduktion von Stickoxiden zu Stickstoff in Wasser.

Die Fluidverteilungsvorrichtung 13 ist also in mehrere Funktionseinheiten unterteilt, welche bezogen auf die Abgasstromrichtung A in mehreren Stufen angeordnet sind. Welche Stufen in einem konkreten Anwendungsbeispiel vorzusehen sind, in welcher Reihenfolge die Stufen anzuordnen sind und welcher Abstand zwischen den Stufen vorzusehen ist, richtet sich nach den jeweiligen räumlichen und thermodynamischen Gegebenheiten und kann derart bestimmt werden, dass sich gerade eine vollständige Verdampfung des eingespritzten Fluids innerhalb des Innenrohrs 12 ergibt. Natürlich ist der Fachmann hierbei bestrebt, grundsätzlich möglichst wenig Funktionsgruppen bzw. möglichst kleine und kostengünstige Komponenten vorzusehen. Wünschenswert ist also stets eine Konfiguration, bei welcher unter Einsatz möglichst weniger und möglichst einfacher Mittel ein ablagerungsfreier Betrieb möglich ist.

Für die in Fig. 1 dargestellte mittige oder achsnahe Einspritzung und einen Innenrohrdurchmesser von 70 mm hat sich ergeben, dass zum Erzielen einer vollständigen und rückstandsfreien Verdampfung lediglich wahlweise die erste Drallerzeugungseinrichtung 19 oder die zweite Drallerzeugungseinrichtung 21 ausreichend sind, sofern die Einspritzdüse 17 dazu ausgebildet ist, das Fluid vollkegelartig zu versprühen und der Sauterdurchmesser der Tropfen höchstens 25 µm beträgt. Bei Einsatz einer hohlkegelartig versprühenden Einspritzdüse ist es hingegen vorteilhaft, sowohl die erste Drallerzeugungseinrichtung 19 als auch die rohrförmige Verdampfereinrichtung 23 vorzusehen. Sofern eine vollkegelartig versprühende Einspritzdüse eingesetzt wird und der Sauterdurchmesser der Tropfen mindestens 25 µm beträgt, ist es bevorzugt, sowohl die erste Drallerzeugungseinrichtung 19 als auch die zweite Drallerzeugungseinrichtung 21 vorzusehen. Sofern hingegen eine hohlkegelartig versprühende Einspritzdüse eingesetzt wird und der Sauterdurchmesser der Tropfen mindestens 25 µm beträgt, ist vorzugsweise sowohl die erste Drallerzeugungseinrichtung 19 als auch die zweite Drallerzeugungseinrichtung 21 und zusätzlich die rohrförmige Verdampfereinrichtung 23 vorzusehen. Alle vorstehend beschriebenen Konstellationen eignen sich sehr gut, um eine rückstandsfreie Verdampfung des Gemischs zu erzielen. Sollte es jedoch erforderlich sein, so können auch noch weitere Drallerzeugungseinrichtungen und/oder Verdampfereinrichtungen vorgesehen sein.

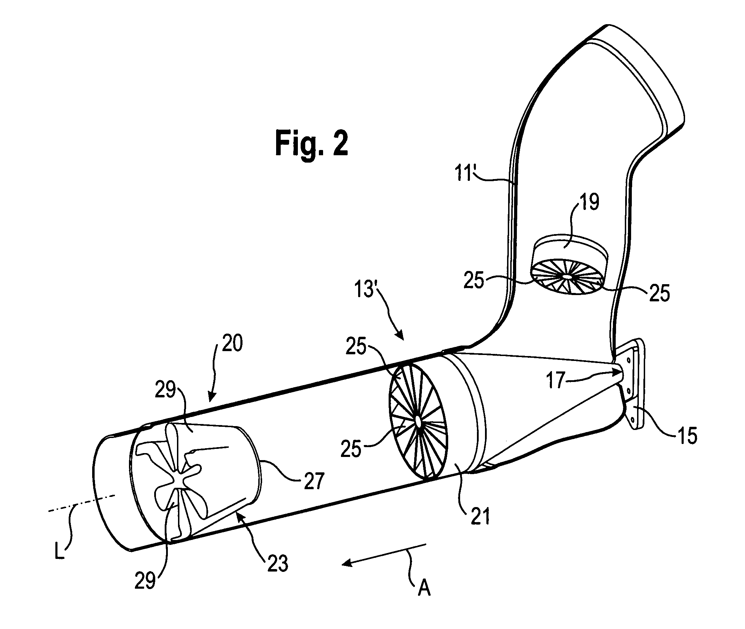

Fig. 2 zeigt eine ähnliche Vorrichtung 13 wie die in Fig. 1 dargestellte, welche jedoch in einen abgewinkelten Rohrabschnitt 11' des Abgasstrangs integriert ist. Die Einspritzdüse 17 ist im Bereich des Knicks an der Wand des Rohrabschnitts 11' angeordnet. Wie bei der Ausführungsform gemäß Fig. 1 sind in Abgasstromrichtung A gesehen aufeinanderfolgend eine erste Drallerzeugungseinrichtung 19, eine zweite Drallerzeugungseinrichtung 21 sowie eine rohrförmige Verdampfereinrichtung 23 vorgesehen. Es hat sich herausgestellt, dass lediglich die zweite Drallerzeugungseinrichtung 21 zum Erzielen einer vollständigen Verdampfung notwendig ist, sofern eine vollkegelartig versprühende Einspritzdüse eingesetzt wird und der Sauterdurchmesser der Tropfen mindestens 50 µm beträgt. Sofern hingegen eine hohlkegelartig versprühende Einspritzdüse eingesetzt wird und der Sauterdurchmesser der Tropfen mindestens 50 µm beträgt, sind bevorzugt sowohl die zweite Drallerzeugungseinrichtung 21 als auch die rohrförmige Verdampfereinrichtung 23 vorzusehen. Beide beschriebenen Konstellationen eignen sich gut zum Erzielen einer rückstandsfreien Verdampfung des Fluids. Bei einem vergrößerten Innenrohrdurchmesser, z.B. einem Innenrohrdurchmesser von 140 mm, kann es zweckmäßig sein, auch die Tropfengröße zu erhöhen, z.B. auf bis zu 100 µm. Im Übrigen ist die Funktionsweise der Vorrichtung wie bei der Variante gemäß Fig. 1.

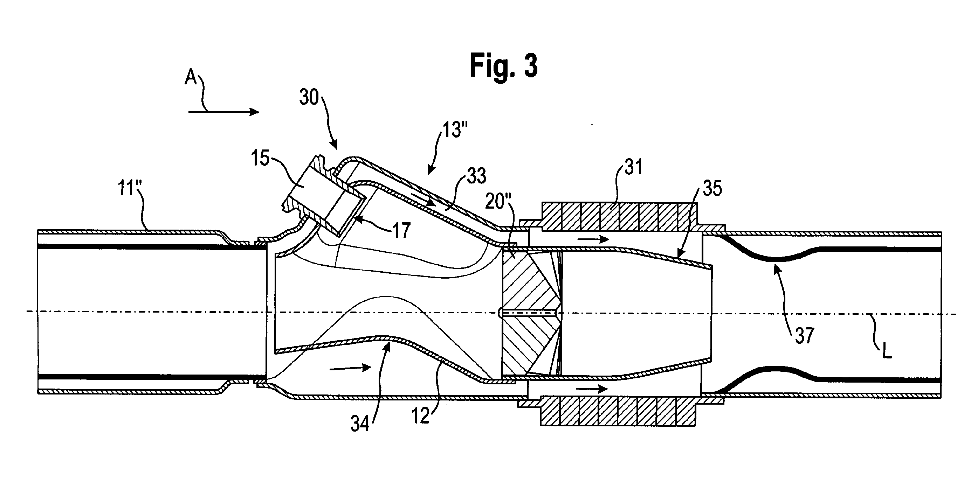

Fig. 3 zeigt eine Vorrichtung 13" gemäß einer weiteren Ausführungsform der Erfindung, welche in einen im Wesentlichen geradlinig verlaufenden Abgasstrang 11" ähnlich dem Abgasstrang 11 gemäß Fig. 1 integriert ist. Die Einspritzeinrichtung 15 ist hier in einer Ausbeulung 30 des Abgasstrangs 11" derart angeordnet, dass die Einspritzdüse 17 das Fluid schräg nach vorne in den Abgasstrom einsprüht. Die Einspritzdüse 17 mündet dabei in ein Innenrohr 12, in welches auch eine drallerzeugende Mischvorrichtung 20" integriert ist. Wie aus Fig. 3 hervorgeht, besteht zwischen dem Innenrohr 12 und der Wand des Abgasstrangs 11" ein Luftspalt 33, sodass ein Teil des Abgasstroms am Innenrohr 12 außenseitig vorbeiströmt, was in Fig. 3 durch Pfeile verdeutlicht ist. Stromabwärts des Innenrohrs 12 vereinigen sich der durch das Innenrohr 12 strömende Anteil des Abgasstroms und der das Innenrohr 12 umströmende Anteil des Abgasstroms wieder. Das Innenrohr 12 weist an seinem stromabwärtigen Ende eine Verjüngung 35 auf, welche aufgrund des Venturi-Effekts eine Erhöhung der Strömungsgeschwindigkeit bewirkt. Durch das Umströmen wird das Innenrohr 12 erwärmt und somit eine Verdampfung von Fluid an den Oberflächen des Innenrohrs 12 sowie der Mischvorrichtung 20" begünstigt. Unmittelbar stromabwärts der Verjüngung 35 weist der Abgasstrang 11" eine Engstelle 37 auf, durch welche ein schnelleres Vermischen der Abgase des Hauptstroms und des Nebenstroms erzielt werden kann.

Der Abgasstrang 11" weist einen Entkopplungsabschnitt 31 auf, welcher gegenüber den vorausgehenden und nachfolgenden Abschnitten des Abgasstrangs 11" eine verringerte Steifigkeit aufweist, um so der Übertragung von Schwingungen entgegenzuwirken und Verspannungen zu vermeiden. Der Entkopplungsabschnitt 31 ist als gewickelter Agraffschlauch ausgeführt, welcher von einem flexiblen Wellrohr aus Dünnblech umhüllt ist. Das Innenrohr 12 erstreckt sich entlang der gesamten Länge des Entkopplungsabschnitts 31 und endet erst unmittelbar stromabwärts des Entkopplungsabschnitts 31. Die Befestigung des Innenrohrs 12 am Abgasstrang 11" erfolgt ausschließlich im Bereich von starren Komponenten des Rohrabschnitts 11" und nicht im Bereich des flexiblen Entkopplungsabschnitts 31. Mit anderen Worten ragt das Innenrohr 12 frei in den Entkopplungsabschnitt 31 hinein, sodass die durch den Entkopplungsabschnitt 31 ermöglichte Beweglichkeit des Abgasstrangs 11" erhalten bleibt. Gleichzeitig schirmt das Innenrohr 12 die Wand des Entkopplungsabschnitts 31 von dem Hauptstrom des Abgases ab und wirkt somit einer Fluidablagerung auf der unregelmäßigen Oberfläche des Entkopplungsabschnitts 31 entgegen. Eine Einbuchtung 34 des Innenrohrs 12 bewirkt eine gezielte Führung des Abgasstroms in dem Sinne, dass die Strömungsrichtung besser an die Einspritzrichtung angepasst wird.

Es versteht sich, dass die Mischvorrichtung 20" weitere Komponenten umfassen kann, wie z.B. mehrere unterschiedliche Drallerzeugungseinrichtungen oder eine rohrförmige Verdampfereinrichtung. Auch kann eine Anordnung mit umströmtem Innenrohr 12 grundsätzlich auch mit den vorstehend beschriebenen Maßnahmen zur Vermischungsverbesserung kombiniert werden. Sie kann jedoch auch ohne derartige Maßnahmen zur Anwendung kommen.

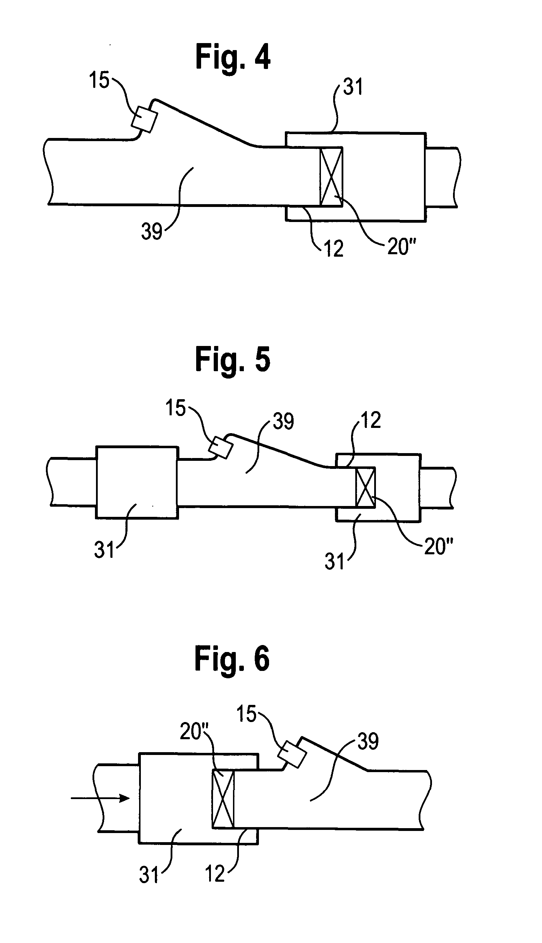

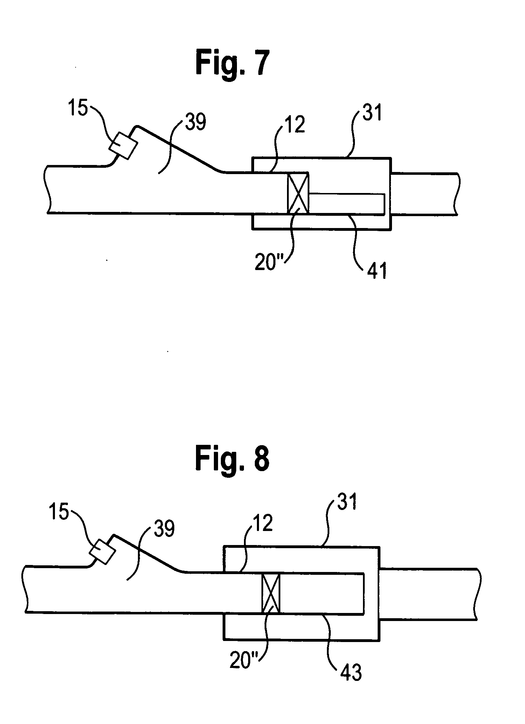

Fig. 4 bis 8 zeigen weitere beispielhafte Ausführungsformen der Erfindung. Gemäß Fig. 4 kann das Innenrohr 12 einen Teil eines die Einspritzeinrichtung 15 sowie eine Mischvorrichtung 20" beinhaltenden Dosiermoduls 39 bilden und sich lediglich teilweise in einen Entkopplungsabschnitt 31 hinein erstrecken. Fig. 5 zeigt eine Ausführungsform, bei der ein Dosiermodul 39 zwischen zwei Entkopplungsabschnitten 31 angeordnet ist. Da die Mischvorrichtung 20" gewissermaßen in dem Entkopplungsabschnitt 31 angeordnet ist, ist der erforderliche Bauraum gegenüber einem System mit hintereinander angeordneten Komponenten verringert. Gemäß Fig. 6 kann die dem Innenrohr 12 zugeordnete Mischvorrichtung 20" auch stromaufwärts der Einspritzeinrichtung 15 angeordnet sein und somit als reiner Drallerzeuger wirken. Bei der Ausgestaltung gemäß Fig. 7 ist am stromabwärtigen Ende des Innenrohrs 12 ein halbschalenartiger Fortsatz 41 vorgesehen, der in Gebrauchslage vor allem den unteren Teil des Entkopplungsabschnitts 31 vor aus der Mischvorrichtung 20" austretenden Fluidtröpfchen schützt und diese verdampft. Wie aus Fig. 8 hervorgeht, kann die Mischvorrichtung 20" auch am Ende eines Dosiermoduls 39 vorgesehen sein, wobei sich ein Verlängerungsrohr 43 an die Mischvorrichtung 20" anschließt.

### Bezugszeichenliste

- 11, 11', 11": Rohrabschnitt
- 12: Innenrohr
- 13, 13', 13": Vorrichtung zum Verteilen eines Fluids
- 15: Einspritzeinrichtung
- 17: Einspritzdüse
- 19: erste Drallerzeugungseinrichtung
- 20, 20": Mischvorrichtung
- 21: zweite Drallerzeugungseinrichtung
- 23: rohrförmige Verdampfereinrichtung
- 25: Gasleitschaufel
- 27: Rohr
- 29: Außenfläche
- 30: Ausbeulung
- 31: Entkopplungsabschnitt
- 33: Luftspalt
- 34: Einbuchtung
- 35: Verjüngung
- 37: Engstelle
- 39: Dosiermodul
- 41: halbschalenförmiger Fortsatz
- 43: Verlängerungsrohr

- A: Abgasstromrichtung
- L: Längsmittelachse

## Patentansprüche

1. Vorrichtung (13, 13', 13") zum Verteilen von Fluiden, insbesondere eines Wasser-Harnstoff-Gemisches oder eines Flüssigkraftstoffs, in Abgasanlagen einer Brennkraftmaschine, mit einer insbesondere vor einem sogenannten SCR-Katalysator in den Abgasstrang (11, 11', 11 ") mündenden Einspritzeinrichtung (15), wobei eine Kombination aus einer Mehrzahl von Einzelmaßnahmen zur Erzielung einer gleichmäßigen Vermischung der Fluide mit dem Abgas und einer vollständigen Verdampfung der Fluide in dem Abgas vorgesehen ist, wobei die Einzelmaßnahmen umfassen:
- wenigstens eine Drallerzeugungseinrichtung (19) und wenigstens eine Mischvorrichtung (20, 20"),
- bevorzugt wenigstens einen Katalysator und
- eine Einspritzdüse (17) der Einspritzeinrichtung (15), welche in einer vorgegebenen Beabstandung zu einer Wand des Abgasstrangs (11, 11', 11 ") angeordnet ist,
**gekennzeichnet durch**
wenigstens eine Drallerzeugungseinrichtung (19), welche mehrere turbinenartig angeordnete Gasleitschaufeln (25) umfasst, und eine Mischvorrichtung (20), die wenigstens eine weitere Drallerzeugungseinrichtung (21) und eine rohrförmige Verdampfereinrichtung (23) umfasst.

2. Vorrichtung nach Anspruch 1,
**dadurch gekennzeichnet, dass**
ein Hydrolysekatalysator vorgesehen ist, welcher insbesondere stromaufwärts eines sogenannten SCR-Katalysators angeordnet ist.

3. Vorrichtung nach zumindest einem der vorstehenden Ansprüche,
**dadurch gekennzeichnet, dass**
ein Stromführungselement (12) vorgesehen ist, das im Inneren des Abgasstrangs (11") angeordnet und zumindest abschnittsweise von einer Wand des Abgasstrangs (11") beabstandet ist und das zumindest teilweise in einen flexiblen Entkopplungsabschnitt (31) des Abgasstrangs (11") hineinragt, wobei das Stromführungselement (12) insbesondere in einem stromabwärtigen Bereich des Entkopplungsabschnitts (31) endet, wobei, bevorzugt,
die Einspritzeinrichtung (15) stromaufwärts des flexiblen Entkopplungsabschnitts (31) des Abgasstrangs (11") angeordnet ist.

4. Vorrichtung nach Anspruch 3,
**dadurch gekennzeichnet, dass**
das Stromführungselement (12) als zu dem Abgasstrang (11") zumindest abschnittsweise koaxiales Innenrohr ausgebildet ist und/oder dass
das Stromführungselement (12) an seinem stromabwärtigen Ende einen umfangsseitig unterbrochenen, insbesondere halbschalenförmigen, Fortsetzungsabschnitt (41) aufweist.

5. Vorrichtung nach Anspruch 3 oder 4,
**dadurch gekennzeichnet, dass**
das Stromführungselement (12) in Abgasstromrichtung (A) gesehen abschnittsweise verjüngt ist und/oder dass
das Stromführungselement (12) derart in den Abgasstrang (11") eingebunden ist, dass es außenseitig von Abgas umströmbar ist.

6. Vorrichtung nach zumindest einem der vorstehenden Ansprüche,
**dadurch gekennzeichnet, dass**
die Drallerzeugungseinrichtung (19) und/oder die Mischvorrichtung (20) in ein Stromführungselement (12) integriert ist und/oder dass die Einspritzeinrichtung (15) in ein Stromführungselement (12) mündet.

7. Vorrichtung nach zumindest einem der vorstehenden Ansprüche,
**dadurch gekennzeichnet, dass**
die Einspritzdüse (17) an der Wand des Abgasstrangs (11') angeordnet ist oder dass
die Einspritzdüse (17) bezogen auf einen Querschnitt des Abgasstrangs (11) mittig angeordnet ist.

8. Vorrichtung nach zumindest einem der vorstehenden Ansprüche,
**dadurch gekennzeichnet, dass**
die Einspritzdüse (17) in einem abgewinkelten Abschnitt des Abgasstrangs (11') angeordnet ist.

9. Vorrichtung nach zumindest einem der vorstehenden Ansprüche,
**dadurch gekennzeichnet, dass**
die Einspritzdüse (17) dazu ausgebildet ist, die Fluide hohlkegelartig oder vollkegelartig zu versprühen und/oder dass zwei gegeneinander gestellte Einspritzdüsen zum flachkegelartigen Versprühen der Fluide vorgesehen sind und/oder dass die Einspritzeinrichtung (15) zum Versprühen der Fluide mit einer vorbestimmten durchschnittlichen Tropfengröße ausgebildet ist.

10. Vorrichtung nach zumindest einem der vorstehenden Ansprüche,
**dadurch gekennzeichnet, dass**
die Kombination aus einer Mehrzahl von Einzelmaßnahmen umfasst:
- wenigstens eine Drallerzeugungseinrichtung (19, 21) und
- eine Einspritzdüse (17) der Einspritzeinrichtung (15), welche bezogen auf einen Querschnitt des Abgasstrangs (11) mittig angeordnet ist und zum vollkegelartigen Versprühen der Fluide mit einer Tropfengröße von höchstens 25 µm Sauterdurchmesser ausgebildet ist.

11. Vorrichtung nach zumindest einem der vorstehenden Ansprüche,
**dadurch gekennzeichnet, dass**
die Kombination aus einer Mehrzahl von Einzelmaßnahmen umfasst:
- wenigstens eine Drallerzeugungseinrichtung (19), die stromaufwärts der Einspritzeinrichtung (15) vorgesehen ist,
- wenigstens eine Mischvorrichtung (20), die stromabwärts der Einspritzeinrichtung (15) vorgesehen ist und die wenigstens eine rohrförmige Verdampfereinrichtung (23) umfasst, und
- eine Einspritzdüse (17) der Einspritzeinrichtung (15), welche bezogen auf einen Querschnitt des Abgasstrangs (11) mittig angeordnet ist und zum hohlkegelartigen Versprühen der Fluide mit einer Tropfengröße von höchstens 25 µm Sauterdurchmesser ausgebildet ist.

12. Vorrichtung nach zumindest einem der vorstehenden Ansprüche,
**dadurch gekennzeichnet, dass**
die Kombination aus einer Mehrzahl von Einzelmaßnahmen umfasst:
- wenigstens eine Drallerzeugungseinrichtung (19), die stromaufwärts der Einspritzeinrichtung (15) vorgesehen ist,
- wenigstens eine Mischvorrichtung (20), die stromabwärts der Einspritzeinrichtung (15) vorgesehen ist und die wenigstens eine Drallerzeugungseinrichtung (21) umfasst, und
- eine Einspritzdüse (17) der Einspritzeinrichtung (15), welche bezogen auf einen Querschnitt des Abgasstrangs mittig angeordnet ist und zum vollkegelartigen Versprühen der Fluide mit einer Tropfengröße von mindestens 25 µm Sauterdurchmesser ausgebildet ist.

13. Vorrichtung nach zumindest einem der vorstehenden Ansprüche,
**dadurch gekennzeichnet, dass**
die Kombination aus einer Mehrzahl von Einzelmaßnahmen umfasst:
- wenigstens eine Drallerzeugungseinrichtung (19), die stromaufwärts der Einspritzeinrichtung (15) vorgesehen ist,
- wenigstens eine Mischvorrichtung (20), die stromabwärts der Einspritzeinrichtung (15) vorgesehen ist und die wenigstens eine Drallerzeugungseinrichtung (21) und eine rohrförmige Verdampfereinrichtung (23) umfasst, und
- eine Einspritzdüse (17) der Einspritzeinrichtung (15), welche bezogen auf einen Querschnitt des Abgasstrangs (11) mittig angeordnet ist und zum hohlkegelartigen Versprühen der Fluide mit einer Tropfengröße von mindestens 25 µm Sauterdurchmesser ausgebildet ist.

14. Vorrichtung nach zumindest einem der vorstehenden Ansprüche,
**dadurch gekennzeichnet, dass**
die Kombination aus einer Mehrzahl von Einzelmaßnahmen umfasst:
- wenigstens eine Mischvorrichtung (20), die stromabwärts der Einspritzeinrichtung (15) vorgesehen ist und die wenigstens eine Drallerzeugungseinrichtung (21) umfasst, und
- eine Einspritzdüse (17) der Einspritzeinrichtung (15), welche an der Wand des Abgasstrangs (11') angeordnet ist und zum vollkegelartigen Versprühen der Fluide mit einer Tropfengröße von mindestens 50 µm Sauterdurchmesser ausgebildet ist.

15. Vorrichtung nach zumindest einem der vorstehenden Ansprüche,
**dadurch gekennzeichnet, dass**
die Kombination aus einer Mehrzahl von Einzelmaßnahmen umfasst:
- wenigstens eine Mischvorrichtung (20), die stromabwärts der Einspritzeinrichtung (15) vorgesehen ist und die wenigstens eine Drallerzeugungseinrichtung (21) und eine rohrförmige Verdampfereinrichtung (23) umfasst, und
- eine Einspritzdüse (17) der Einspritzeinrichtung (15), welche an der Wand des Abgasstrangs (11') angeordnet ist und zum hohlkegelartigen Versprühen der Fluide mit einer Tropfengröße von mindestens 50 µm Sauterdurchmesser ausgebildet ist.

## Claims

1. An apparatus (13, 13', 13") for distributing fluids, in particular a water-urea mixture or a liquid fuel, in exhaust systems of an internal combustion engine, having an injection device (15), in particular opening into the exhaust tract (11, 11', 11 ") before a so-called SCR catalyst, wherein
a combination of a plurality of individual measures is provided for achieving a uniform mixing of the fluids with the exhaust gas and a complete vaporizing of the fluids in the exhaust gas, wherein the individual measures comprise:
- at least one swirl-generating device (19) and at least one mixing apparatus (20, 20");
- preferably at least one catalyst; and
- an injection nozzle (17) of the injection device (15) which is arranged at a predefined spacing from a wall of the exhaust tract (11, 11', 11")
**characterized by**
at least one swirl-generating device (19) which comprises a plurality of gas vanes (25) arranged in the manner of a turbine; and by a mixing apparatus (20) which comprises at least one further swirl-generating device (21) and a tubular vaporizer device (23).

2. An apparatus in accordance with claim 1,
**characterized in that**
a hydrolysis catalyst is provided which is in particular arranged upstream of a so-called SCR catalyst.

3. An apparatus in accordance with one of the preceding claims,
**characterized in that**
a flow guiding element (12) is provided which is arranged in the interior of the exhaust tract (11") and is spaced apart at least sectionally from a wall of the exhaust tract (11") and which projects at least partly into a flexible decoupling section (31) of the exhaust tract (11"), with the flow guiding element (12) in particular ending in a downstream region of the decoupling section (31), wherein, preferably,
the injection device (15) is arranged upstream of the flexible decoupling section (31) of the exhaust tract (11").

4. An apparatus in accordance with claim 3,
**characterized in that**
the flow guiding element (12) is configured as an inner pipe at least sectionally coaxial to the exhaust tract (11") and/or **in that** the flow guiding element (12) has a peripherally interrupted, in particular half-shell like prolongation section (41), at its downstream end.

5. An apparatus in accordance with claim 3 or claim 4,
**characterized in that**
the flow guiding element (12) is sectionally tapered viewed in the exhaust gas flow direction (A); and/or **in that** the flow guiding element (12) is integrated into the exhaust tract (11") such that it can be flowed around by exhaust gas at the outside.

6. An apparatus in accordance with at least one of the preceding claims,
**characterized in that**
the swirl-generating device (19) and/or the mixing apparatus (20) is integrated into a flow guiding element (12); and/or **in that** the injection device (15) opens into a flow guiding element (12).

7. An apparatus in accordance with at least one of the preceding claims,
**characterized in that**
the injection nozzle (17) is arranged at the wall of the exhaust tract (11'); or **in that**
the injection nozzle (17) is arranged centrally with respect to a cross-section of the exhaust tract (11).

8. An apparatus in accordance with at least one of the preceding claims,
**characterized in that**
the injection nozzle (17) is arranged in an angled section of the exhaust tract (11').

9. An apparatus in accordance with at least one of the preceding claims,
**characterized in that**
the injection nozzle (17) is configured to spray the fluids in the manner of a hollow cone or solid cone; and/or **in that** two injection nozzles set against one another are provided for the spraying of the fluids in the manner of a flat-cone; and/or **in that** the injection device (15) for spraying the fluids is configured with a predefined average droplet size.

10. An apparatus in accordance with at least one of the preceding claims,
**characterized in that**
the combination of a plurality of individual measures comprises:
- at least one swirl-generating device (19, 21); and
- an injection nozzle (17) of the injection device (15) which is arranged centrally with respect to a cross-section of the exhaust tract (11) and is configured for the spraying of the fluids in the manner of a solid cone with a droplet size of at most 25 µm Sauter mean diameter.

11. An apparatus in accordance with at least one of the preceding claims,
**characterized in that**
the combination of a plurality of individual measures comprises:
- at least one swirl-generating device (19) which is provided upstream of the injection device (15);
- at least one mixing apparatus (20) which is provided downstream of the injection device (15) and which comprises at least one tubular vaporizer device (23); and
- an injection nozzle (17) of the injection device (15) which is arranged centrally with respect to a cross-section of the exhaust tract (11) and is configured for the spraying of the fluids in the manner of a hollow cone with a droplet size of at most 25 µm Sauter mean diameter.

12. An apparatus in accordance with at least one of the preceding claims,
**characterized in that**
the combination of a plurality of individual measures comprises:
- at least one swirl-generating device (19) which is provided upstream of the injection device (15);
- at least one mixing apparatus (20) which is provided downstream of the injection device (15) and which comprises at least one swirl-generating device (21); and
- an injection nozzle (17) of the injection device (15) which is arranged centrally with respect to a cross-section of the exhaust tract (11) and is configured for the spraying of the fluids in the manner of a solid cone with a droplet size of at most 25 µm Sauter mean diameter.

13. An apparatus in accordance with at least one of the preceding claims,
**characterized in that**
the combination of a plurality of individual measures comprises:
- at least one swirl-generating device (19) which is provided upstream of the injection device (15);
- at least one mixing apparatus (20) which is provided downstream of the injection device (15) and which comprises at least one swirl generating device (21) and a tubular vaporizer device (23); and
- an injection nozzle (17) of the injection device (15) which is arranged centrally with respect to a cross-section of the exhaust tract (11) and is configured for the spraying of the fluids in the manner of a hollow cone with a droplet size of at most 25 µm Sauter mean diameter.

14. An apparatus in accordance with at least one of the preceding claims,
**characterized in that**
the combination of a plurality of individual measures comprises:
- at least one mixing apparatus (20) which is provided downstream of the injection device (15) and which comprises at least one swirl-generating device (21); and
- an injection nozzle (17) of the injection device (15) which is arranged at the wall of the exhaust tract (11') and is configured for the spraying of the fluids in the manner of a solid cone with a droplet size of at least 50 µm Sauter mean diameter.

15. An apparatus in accordance with at least one of the preceding claims,
**characterized in that**
the combination of a plurality of individual measures comprises:
- at least one mixing apparatus (20) which is provided downstream of the injection device (15) and which comprises at least one swirl-generating device and a tubular vaporizer device (23); and
- an injection nozzle (17) of the injection device (15) which is arranged at the wall of the exhaust tract (11') and is configured for the spraying of the fluids in the manner of a hollow cone with a droplet size of at least 50 µm Sauter mean diameter.

## Revendications

1. Dispositif (13, 13', 13") pour la distribution de fluides, en particulier d'un mélange eau/urée ou d'un carburant liquide, dans des installations de gaz d'échappement d'un moteur à combustion interne, comprenant un système d'injection (15) qui débouche dans le circuit de gaz d'échappement (11, 11', 11 "), en particulier devant un catalyseur dit SCR, dans lequel
il est prévu une combinaison d'une pluralité de mesures techniques individuelles pour atteindre un mélange régulier des fluides avec les gaz d'échappement et une vaporisation complète des fluides dans les gaz d'échappement, dans lequel lesdites mesures techniques individuelles incluent :
- au moins un système de génération de tourbillonnement (19) et au moins un dispositif de mélange (20, 20"),
- de préférence au moins un catalyseur, et
- une tuyère d'injection (17) du système d'injection (15), laquelle est agencée à une distance prédéterminée d'une paroi du circuit de gaz d'échappement (11, 11', 11"),
**caractérisé par**
au moins un système de génération de tourbillonnement (19) qui inclut plusieurs pales de guidage de gaz (25) agencées à la manière d'une turbine, et un dispositif de mélange (20) qui inclut au moins un autre système de génération de tourbillonnement (21) et un dispositif de vaporisation (23) de forme tubulaire.

2. Dispositif selon la revendication 1,
**caractérisé en ce que** qu'il est prévu un catalyseur d'hydrolyse, qui est agencé en particulier en amont d'un catalyseur dit SCR.

3. Dispositif selon l'une au moins des revendications précédentes,
**caractérisé en ce qu'**il est prévu un élément de guidage d'écoulement (12), qui est agencé à l'intérieur du circuit de gaz d'échappement (11") et qui est écarté au moins localement d'une paroi du circuit de gaz d'échappement (11"), et qui pénètre au moins partiellement dans un tronçon de découplage flexible (31) du circuit de gaz d'échappement (11"), dans lequel l'élément de guidage d'écoulement (12) se termine en particulier dans une zone en aval du tronçon de découplage (31), et de préférence
le système d'injection (15) est agencé en amont du tronçon de découplage flexible (31) du circuit de gaz d'échappement (11").

4. Dispositif selon la revendication 3,
**caractérisé en ce que** l'élément de guidage d'écoulement (12) est réalisé sous la forme d'un tube intérieur au moins localement coaxial au circuit de gaz d'échappement (11"), et/ou
**en ce que** l'élément de guidage d'écoulement (12) comprend à son extrémité aval un tronçon de prolongement (41) interrompu sur sa périphérie et en particulier en forme de demi-coque.

5. Dispositif selon la revendication 3 ou 4,
**caractérisé en ce que** l'élément de guidage d'écoulement (12) va en se rétrécissant localement, vu dans la direction d'écoulement des gaz d'échappement (A), et/ou
**en ce que** l'élément de guidage d'écoulement (12) est intégré dans le circuit de gaz d'échappement (11") de telle façon que les gaz d'échappement peuvent s'écouler tout autour de sa face extérieure.

6. Dispositif selon l'une au moins des revendications précédentes,
**caractérisé en ce que** le système de génération de tourbillonnement (19) et/ou le dispositif de mélange (20) est/sont intégrés dans un élément de guidage d'écoulement (12), et/ou **en ce que** le système d'injection (15) débouche dans un élément de guidage d'écoulement (12).

7. Dispositif selon l'une au moins des revendications précédentes,
**caractérisé en ce que**
la tuyère d'injection (17) est agencée sur la paroi du circuit de gaz d'échappement (11'), ou
**en ce que** la tuyère d'injection (17) est agencée au milieu, par référence à une section transversale du circuit de gaz d'échappement (11).

8. Dispositif selon l'une au moins des revendications précédentes,
**caractérisé en ce que** la tuyère d'injection (17) est agencée dans un tronçon en équerre du circuit de gaz d'échappement (11').

9. Dispositif selon l'une au moins des revendications précédentes,
**caractérisé en ce que**
la tuyère d'injection (17) est réalisée pour pulvériser les fluides sous forme de cône creux ou sous forme de cône plein, et/ou en ce qu'il est prévu deux tuyères d'injection placées en sens opposés afin de pulvériser les fluides sous forme de cône aplati, et/ou en ce que le système d'injection (15) est réalisé pour pulvériser les fluides avec une taille de gouttelettes moyenne prédéterminée.

10. Dispositif selon l'une au moins des revendications précédentes, **caractérisé en ce que** la combinaison d'une pluralité de mesures techniques individuelles inclut :
- au moins un système de génération de tourbillonnement (19, 21), et
- une tuyère d'injection (17) du système d'injection (15), laquelle est agencée au milieu par référence à une section transversale du circuit de gaz d'échappement (11) et est réalisée pour pulvériser les fluides sous forme de cône plein avec une taille de gouttelettes présentant un diamètre de Sauter au maximum de 25 µm.

11. Dispositif selon l'une au moins des revendications précédentes, **caractérisé en ce que** la combinaison d'une pluralité de mesures techniques individuelles inclut :
- au moins un système de génération de tourbillonnement (19), qui est prévu en amont du système d'injection (15),
- au moins un dispositif de mélange (20), qui est prévu en aval du système d'injection (15) et qui inclut au moins un système de vaporisation (23) de forme tubulaire, et
- une tuyère d'injection (17) du système d'injection (15) qui est agencée au milieu par référence à une section transversale du circuit de gaz d'échappement (11) et qui est réalisée pour une pulvérisation des fluides en forme de cône creux avec une taille de gouttelettes présentant un diamètre de Sauter au maximum de 25 µm.

12. Dispositif selon l'une au moins des revendications précédentes, **caractérisé en ce que** la combinaison d'une pluralité de mesures techniques individuelles inclut :
- au moins un système de génération de tourbillonnement (19) qui est prévu en amont du système d'injection (15),
- au moins un dispositif de mélange (20), qui est prévu en aval du système d'injection (15) et qui inclut au moins un système de génération de tourbillonnement (21), et
- une tuyère d'injection (17) du système d'injection (15), qui est agencée au milieu par référence à une section transversale du circuit de gaz d'échappement et qui est réalisée pour une pulvérisation des fluides en forme de cône plein avec une taille de gouttelettes présentant un diamètre de Sauter au maximum de 25 µm.

13. Dispositif selon l'une au moins des revendications précédentes, **caractérisé en ce que** la combinaison d'une pluralité de mesures techniques individuelles inclut :
- au moins un système de génération de tourbillonnement (19) qui est prévu en amont du système d'injection (15),
- au moins un dispositif de mélange (20), qui est prévu en aval du système d'injection (15) et qui inclut au moins un système de génération de tourbillonnement (21) et un système de vaporisation (23) de forme tubulaire, et
- une tuyère d'injection (17) du système d'injection (15) qui est agencée au milieu par référence à une section transversale du circuit de gaz d'échappement (11) et qui est réalisée pour une pulvérisation des fluides en forme de cône creux avec une taille de gouttelettes présentant un diamètre de Sauter au maximum de 25 µm.

14. Dispositif selon l'une au moins des revendications précédentes, **caractérisé en ce que** la combinaison d'une pluralité de mesures techniques individuelles inclut :
- au moins un dispositif de mélange (20), qui est prévu en aval du système d'injection (15) et qui inclut au moins un système de génération de tourbillonnement (21), et
- une tuyère d'injection (17) du système d'injection (15), qui est agencée sur la paroi du circuit de gaz d'échappement (11') et qui est réalisée pour une pulvérisation des fluides en forme de cône plein avec une taille de gouttelettes présentant un diamètre de Sauter au maximum de 50 µm.

15. Dispositif selon l'une au moins des revendications précédentes, **caractérisé en ce que** la combinaison d'une pluralité de mesures techniques individuelles inclut :
- au moins un dispositif de mélange (20), qui est prévu en aval du système d'injection (15) et qui inclut au moins un système de génération de tourbillonnement (21) et un système de vaporisation (23) de forme tubulaire, et
- une tuyère d'injection (17) du système d'injection (15), qui est agencée sur la paroi du circuit de gaz d'échappement (11') et qui est réalisée pour une pulvérisation des fluides en forme de cône creux avec une taille de gouttelettes présentant un diamètre de Sauter au maximum de 50 µm.
